19 Europäisches Patentamt

European Patent Office

Office européen des brevets

11 Veröffentlichungsnummer: **0 237 881 B1**

## 12 EUROPÄISCHE PATENTSCHRIFT

45 Veröffentlichungstag der Patentschrift: **06.05.92**

51 Int. Cl.5: **G02C 5/12**

21 Anmeldenummer: **87103160.5**

22 Anmeldetag: **05.03.87**

54 **Halterung fuer Pads zur Nasenauflage an Brillengestellen.**

30 Priorität: **08.03.86 DE 3607799**
**10.11.86 DE 3638311**

43 Veröffentlichungstag der Anmeldung:
**23.09.87 Patentblatt 87/39**

45 Bekanntmachung des Hinweises auf die
Patenterteilung:
**06.05.92 Patentblatt 92/19**

84 Benannte Vertragsstaaten:
**AT BE DE ES FR GB IT NL**

56 Entgegenhaltungen:
**EP-A- 0 067 373          EP-A- 0 115 831**
**EP-A- 0 171 461          DE-A- 3 403 569**
**DE-A- 3 417 255          DE-U- 7 428 158**
**FR-A- 2 193 211**

73 Patentinhaber: **Speer, Herbert**
**Weberstrasse 48**
**W-7531 Eisingen(DE)**

72 Erfinder: **Speer, Herbert**
**Weberstrasse 48**
**W-7531 Eisingen(DE)**

74 Vertreter: **Hubbuch, Helmut, Dipl.-Ing et al**
**Patentanwälte Dr. Rudolf Bauer Dipl.-Ing.**
**Helmut Hubbuch Dipl.-Phys. Ulrich Twelmei-**
**er Westliche Karl-Friedrich-Strasse 29-31**
**W-7530 Pforzheim(DE)**

**Beschreibung**

Nasenauflage für eine Brille, bestehend aus einem Kunststoffpad und einem Stegarm, bei der der Stegarm an einem ende am Brillengestell befestigbar ist nach dem Oberbegriff zu Anspruch 1.

Es sind nach der FR-PS 23 98 321 einerseits Halterungen für Pads aus Kunststoff mit Kugelende am Stegarm bekannt, welche in einer Kugelaufnahme am Padstutzen einrastbar sind. Hierbei ist keine Höhenverstellbarkeit und überdies eine nahezu freie Beweglichkeit gegeben, wie dies unerwünscht ist. Ferner sind nach der FR-PS 21 93 211 höhenverstellbare Stegarme und Padstutzen mit Lochung und Querverschraubung bekannt, wie auch nach dem DE-GM 74 28 158. Hierbei ist die sichtbare Verschraubung unerwünscht als auch gehen die kleinen Schrauben leicht verloren.

Desweiteren sind nach der EP-A 0 067 373 ebenso wie nach der DE-OS 34 03 569 höhenverstellbare Endstegverrastungen vom Stegarmende an einer durchgehenden Bohrung am Padstutzen mittels Wulsten und Lochungen bekannt, welche aber in der Rastverstellung sehr hart gehen, um Haltesicherheit zu geben, was auch zu mehr Abnutzung führt.

Demgegenüber ist es Aufgabe der Halterung für Pads nach der Erfindung eine robustere und stets gleichmäßig gängig, verdeckte, höhenverstellbare Anordnung mit einer vorgegebenen begrenzten Verdrehungsfreiheit zu schaffen.

Zur Lösung dieser Aufgabe kennzeichnet sich die Nasenauflage für eine Brille, bestehend aus einem Kunststoffpad und einem Stegarm, bei der der Stegarm an einem Ende am Brillengestell befestigbar ist nach dem Oberbegriff von Anspruch 1 gemäß der Erfindung dadurch, daS in der als Sackloch ausgebildeten Lochung eine seitlich dazu angeordnete, elastisch eingebettete Rastkugel oder ein Rastnocken zum höhenverstellbaren Einbringen des Stegarmendes vorgesehen ist, wobei die Rastkugel bzw. der Rastnocken mit den Mulden oder Lochungen des freien Stegarmendes verrastbar ist,daß für die elastische Einbettung der Rastkugel bzw. des Rastnockens ein zum Sackloch hin offenes Querloch vorgesehen ist, welches mit einem Kunststoffpuffer ausgerüstet ist, auf dem die Rastkugel bzw. der Rastnocken aufliegt und daS der Kunststoffpuffer im Querloch aus Weichmaterial gebildet ist.

Weitere Einzelheiten der erfindungsgemäßen Halterung für Pads aus Kunststoff zur Nasenauflage ergeben sich aus der Zeichnung in Verbindung mit der nachfolgenden Beschreibung, in welcher bevorzugte Ausführungsformen dargestellt und beschrieben sind und zwar zeigen:

Figur 1 bis 4 und 4a

die Rückansicht, den Querschnitt und Längsschnitt der Pads einer ersten Ausführungsform mit zugehörigem Stegarm in zwei Stellungen,

Figur 5 bis 8 und 8a

die Rückansicht, den Querschnitt und Längsschnitt der Pads einer zweiten Ausführungsform mit zugehörigem Stegarm in zwei Stellungen.

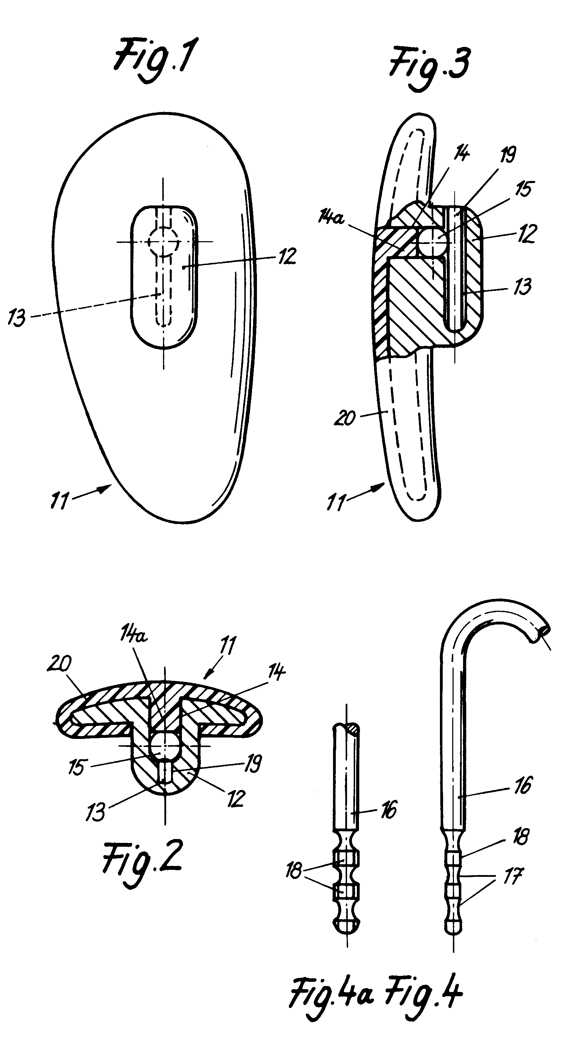

Beim ersten Ausführungsbeispiel nach Fig. 1 bis 4 und 4a besitzt das Pad 11 ein Stutzen 12 parallel zur Längsachse des Pads 11 ein Sackloch 13 mit Querloch 14 in welchem (14) ein Kunststoffpuffer 14a mit Rastkugel 15 eingebracht ist.

Beim ersten Ausführungsbeispiel nach Fig. 1 bis 4 und 4a besitzt das Pad 11 im Stutzen 12 ein Sackloch 13 mit Querloch 14 in welchem (14) ein Kunststoffpuffer 14a mit Rastkugel 15 eingebracht ist. Die Rastkugel 15 arbeitet beim Aufschieben des Pads mit dem Sackloch 13 auf das Stegarmende 16 mit seitlicher Gegenrast 17 an demselben Zusammen, welche hier als Rastrillen bzw. -wulste ausgebildet sind. Auch hier sind beidseits Abflachungen 18 an den Rastwulsten vorgesehen, welche mit korrespondierenden Abflachungen als durchgehende Anlageschulter 19 zusammenwirken. Hierdurch wird ebenfalls einerseits ein völliges Wegschwenken des Pads 11 gegenüber dem am Brillenrand angebrachten Stegarmen 16 vermieden und andererseits eine begrenzte Seitenbeweglichkeit ermöglicht. Das Pad 11 wird beim gezeigten Ausführungsbeispiel in der Lage von Fig. 2 und 4 bzw. Fig. 1 und 4a zusammengesteckt, wobei Fig. 4 und 4a um 90° zueinander verdrehte Stellungen zeigen. Schließlich ist bei diesem Ausführungsbeispiel der Kunststoffpuffer 14a aus Weichmaterial gleichzeitig mit dem Überzug 20 des Padkerns, letzterer aus härterem Kunststoffmaterial, gebildet und er (14a) ist vorzugsweise mit diesem (20) ein bzw. aufgebracht.

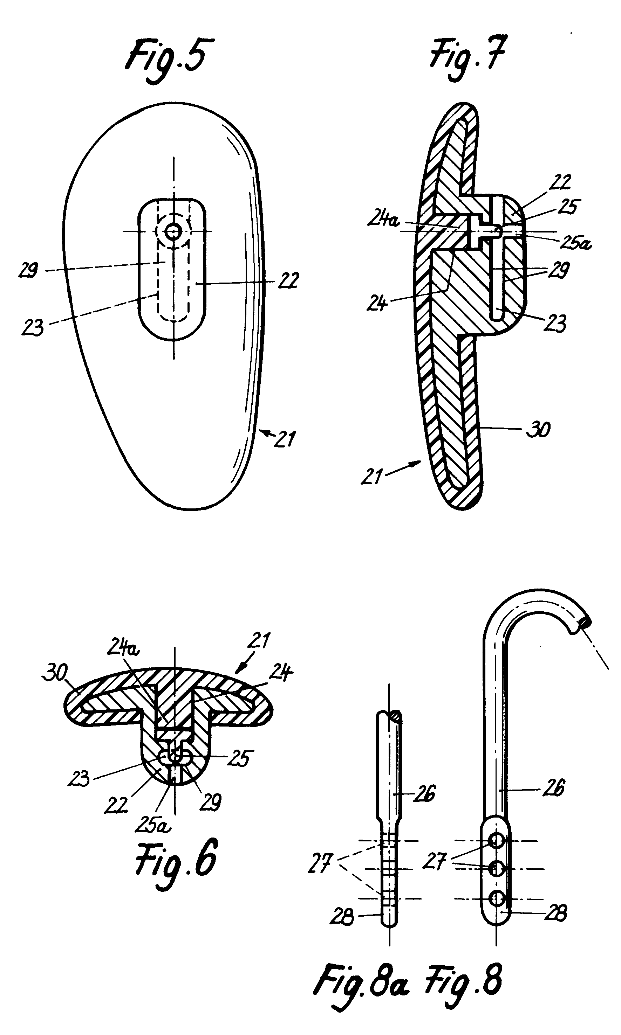

Beim zweiten Ausführungsbeispiel nach Fig. 5 bis 8 und 8a besitzt das Pad 21 im Stutzen 22 ein Sackloch 23 mit Querloch 24, in welchem ein Kunststoffpuffer 24a mit Rastnocken 25 eingebracht ist, wobei die Lochung 25a zum Eindrücken des Rastnockens 25 für den Rastvorgang dient. Der Rastnocken 25 arbeitet beim Aufschieben des Pads 21 mit dem Sackloch 23 auf das Stegarmende 26 mit Gegenrasten in Form von Lochungen 27 in Stegform zusammen. Auch hier sind beidseits Abflachungen 28 vorgesehen, in welchen die Lochungen 27 liegen; diesen (28) sind im Sackloch 23, welches als Flachloch ausgebildet ist, korrespondierende Abflachungen als Seitenführungen 29 beim Zusammenstecken zugeordnet. Auch hierdurch wird einerseits ein völliges Wegschwenken des Pads 21 gegenüber dem am Brillenrand angebrachten Stegarm 26 vermieden und andererseits eine begrenzte Seitenbeweglichkeit ermöglicht. Das Pad 21 wird bei diesem Ausführungsbeispiel in der Lage von Fig. 6 und 8 bwz. Fig. 7 und 8a zusammengesteckt, wobei Fig. 8 und 8a um 90° zueinander verdrehte Stellungen Zeigen. Schließlich ist auch bei diesem Ausführungsbeispiel der Kunststoffpuffer 24a aus Weichmaterial gleichzeitig mit dem Überzug 30 des Padkerns, letzterer aus härterem Kunststoffmaterial, gebildet und er (24a) ist vorzugsweise mit diesem (30) ein- und aufgebracht.

Wie sich aus diesen Ausführungsbeispielen ergibt, sind jeweils zwei parallele Seitenabflachungen am Stegende für die korrespondierenden Abflachungen in der Aufnahme vorgesehen, wobei durch Wahl des jeweiligen Abstands der Drehwinkel für das Seitenspiel vorgegeben ist, so daß hier bei der Fertigung leicht unterschiedliche Vorgaben oder auch später durch Abstandvergrößerung der Planflächen individuelle Einstellungen möglich sind.

**Patentansprüche**

1.  Nasenauflage für eine Brille, bestehend aus einem Kunststoffpad und einem Stegarm, bei der der Stegarm an einem Ende am Brillengestell befestigbar ist und am freien Stegarmende mehrere untereinanderliegende Mulden oder Lochungen mit zwischenliegenden Rastwulsten oder Raststegen besitzt und bei der das Kunststoffpad eine Lochung mit mit einer Rast einrichtung aufweist, mit welcher das freie Stegarmende höhenverstellbar verrastbar ist, dadurch gekennzeichnet,
    daß in der als Sackloch (13, 23) ausgebildeten Lochung eine seitlich dazu angordnete, elastisch eingebettete Rastkugel (15) oder ein Rastnocken (25) zum höhenverstellbaren Einbringen des Stegarmendes (16, 26) vorgesehen ist, wobei die Rastkugel bzw. der Rastnokken mit den Mulden (17) oder Lochungen (27) des freien Stegarmendes verrastbar ist;
    daß für die elastische Einbettung der Rastkugel (15), bzw. des Rastnockens (25) ein zum Sackloch (13, 23) hin offenes Querloch (14, 24) vorgesehen ist, welches mit einem Kunststoffpuffer (14a, 24a) ausgerüstet ist, auf dem die Rastkugel (15) bzw. der Rastnocken (25) aufliegt; und
    daß der Kunststoffpuffer (14a, 24a) im Querloch (14, 24) aus Weichmaterial gebildet ist.

2.  Nasenauflage nach Anspruch 1, dadurch gekennzeichnet, daß das Querloch (14, 24) auch nach außen padseitig offen ist und das Weichmaterial des Kunststoffpuffers (14a, 24a) in den Überzug (20, 30) des Pads (11) aus dem gleichen Material übergeht.

3.  Halterung nach Anspruch 1, dadurch gekennzeichnet, daß Seitenabflachungen (18, 28) am Stegarmende (16, 26) und parallele Abflachungen (19, 29) im Sackloch (13, 23) vorgesehen sind, wobei durch Wahl des jeweiligen Abstandes der Abflachungen (19, 29) im Sackloch (13, 23) zu denen (18, 28) des Stegarmendes (16, 26) das Seitenspiel - d.i. eine begrenzte Verdrehungsfreiheit - vorgegeben ist.

**Claims**

1.  Nose support for spectacles consisting of a plastic pad and a bridge arm, with the bridge arm being connected at one end to the spectacle frame and the free end of the arm having several cavities or perforations lying underneath each other with intermediate locking beads or ridges, and in which the plastic pad has a hole with a locking device with which the free bridge arm end can be locked for height adjustment, characterised in that
    in the perforation designed as a blind hold (13, 23) there is provided a laterally arranged, elastically embedded locking sphere (15) or locking cam (25) for the height-adjustable insertion of the bridge arm end (16, 26), whereby the locking sphere or locking cam can be interlocked with the cavities (17) or perforations (27) of the free bridge arm end;
    in that for elastically embedding the locking sphere (15) or the locking cam (25) a transverse hole (14, 24) with its opening towards the blind hole (13, 23) is provided, equipped with a plastic buffer (14a, 24a) on which the locking sphere (15) or locking cam (25) rests; and
    in that the plastic buffer (14a, 24a) in the transverse hole (14, 24) is made of soft material.

2.  Nose support according to Claim 1 characterised in that the transverse hole (14, 24) is also open externally on the pad side and that the soft material of the plastic buffer (14a, 24a) merges with the covering (20, 30) of the pad (11) of identical material.

3.  Holder according to Claim 1, characterised in that lateral flat surfaces (18, 28) on the bridge arm end (16, 26) and parallel flat surfaces (19, 29) are provided in the blind hole (13, 23), whereby by selecting the corresponding distance between the flat surfaces (19, 29) in the blind hole (13, 23) and those (18, 28) of the bridge arm end the lateral play, that is to say limited torsional freedom, is determined.

**Revendications**

1. Appui de nez pour une paire de lunettes, composé d'un patin en matière plastique et d'un bras de liaison, dans lequel le bras de liaison peut être fixé à une extrémité à la monture de lunettes et possède à son extrémité libre plusieurs dépressions ou perçages placés les uns au-dessous des autres, séparés par des bourrelets ou nervures d'arrêt, et dans lequel le patin en matière plastique présente un perçage muni d'un dispositif d'arrêt au moyen duquel l'extrémité libre du bras de liaison peut être enclenchée de manière réglable en hauteur, caractérisé en ce que :

il est prévu dans le perçage sous forme de trou borgne (13,23) une bille d'arrêt (15) ou un ergot d'arrêt (25) encastré élastiquement, disposé latéralement par rapport à lui, pour l'introduction réglable en hauteur du bras de liaison (16,26), la bille ou l'ergot d'arrêt pouvant s'enclencher avec les dépressions (17) ou perçages (27) de l'extrémité libre du bras de liaison ;

pour l'encastrement élastique de la bille d'arrêt (15) ou de l'ergot d'arrêt (25) est prévu un trou transversal (14,24) ouvert vers le trou borgne (13,23), qui est garni d'un tampon en matière plastique (14a,24a) sur lequel s'appuie la bille d'arrêt (15) ou l'ergot d'arrêt (25) ; et

le tampon de matière plastique (14a,24a) disposé dans le trou transversal (14,24) est constitué de matière tendre.

2. Appui de nez selon la revendication 1, caractérisé en ce que le trou transversal (14,24) est ouvert aussi vers l'extérieur du côté du patin et que la matière tendre du tampon de matière plastique (14a,24a) se continue dans le revêtement (20,30) du patin (11) réalisé dans la même matière.

3. Fixation selon la revendication 1, caractérisée en ce que des méplats latéraux (18,28) sont prévus sur l'extrémité du bras de liaison (16,26) et des méplats parallèles (19,29) dans le trou borgne (13,28), le jeu latéral -c'est-à-dire une liberté de rotation limitée- étant prédéterminé par le choix de la distance des méplats (19,29) dans le trou borgne (13,23) par rapport à ceux (18,28) de l'extrémité du bras de liaison (16,26).

## Fig.1

## Fig.3

## Fig.2

## Fig.4a  Fig.4

# Fig.5

# Fig.7

# Fig.6

# Fig.8a  Fig.8